Europäisches Patentamt

European Patent Office

Office européen des brevets

(11) Publication number: **0 180 334**
A2

# (12) EUROPEAN PATENT APPLICATION

(21) Application number: **85307006.8**

(22) Date of filing: **01.10.85**

(51) Int. Cl.⁴: **B 05 C 5/04,** B 05 C 17/00,
B 29 C 67/18, H 02 G 1/14

(30) Priority: **01.11.84 CA 466886**

(43) Date of publication of application: **07.05.86**
**Bulletin 86/19**

(84) Designated Contracting States: **DE FR GB SE**

(71) Applicant: **NORTHERN TELECOM LIMITED,**
**1600 Dorchester Boulevard West, Montreal Quebec**
**H3H 1R1 (CA)**

(72) Inventor: **Charlebois, Leonard Joseph, 144 Paddock**
**Way, Kanata Ontario, K2L 1K5 (CA)**

(74) Representative: **Crawford, Andrew Birkby et al, A.A.**
**THORNTON & CO. Northumberland House 303-306 High**
**Holborn, London WC1V 7LE (GB)**

(54) **Encapsulating articles.**

(57)  A method of encapsulating an article by placing non-molten plastics material inside a cylindrical reservoir (26), providing heat to render the material molten and then holding the molten material sufficiently long to allow any entrapped gases to escape. After gas removal, the reservoir is interconnected with a mould cavity and a wall (36) of the reservoir is moved to force the material from the reservoir and into a mould cavity. A manually portable container (12) for the use of the method has heating means (18) for the material and support means (42) to hold the outlet end of the reservoir uppermost so as to allow for expulsion of the gases.

ACTORUM AG

ENCAPSULATING ARTICLES

This invention relates to the encapsulation of articles.

In some industries, it is necessary for operators working in the field to seal articles, for instance, against the effects of ambient conditions. Various methods of sealing have been suggested and one which has recently been proposed and has been successfully used is the method of sealing by providing a mould which surrounds the article and an encapsulation is formed around the article by transferring heated molten plastics material into the mould cavity and allowing it to cool and set. Encapsulations formed by moulding techniques have successfully been employed in the telecommunications cable industry. In the telecommunications cable industry, it is necessary to form splices in the field and this involves cutting into a cable to enable the conductors to be reached. The conductors are then severed and connected to other wires leading from the cable. It is then necessary to seal around the area of the splice to prevent the connections between the conductors from being adversely affected by atmospheric conditions such as dampness or affected by moisture conditions such as is found surrounding underground cables. The use of polymeric materials, as moulded encapsulations around such splices, has simplified previous encapsulation procedures and also has cheapened the encapsulation process.

Successful methods of sealing, including moulded encapsulations, have been described in U.S. patent numbers 4,152,539, granted May 1, 1979, and 4,322,573, granted March 13, 1982, both patents being in the name of Leonard J. Charlebois.

It has been found that preformed encapsulations around preformed splices may be easily provided upon cable before leaving the factory, by the use of factory installed extruders which can form an encapsulation in less than 3 minutes. Difficulties have been discovered, however, in the provision of encapsulations in the field. In the field, no ready machinery has been available for the forming of encapsulations and it has been impractical to consider using factory equipment in the field. The manufacture of encapsulated or sealed splices in the field by modern techniques must require the use of small manually portable units of apparatus for providing molten flowable plastics material and for forcing such material into mould cavities. Problems have been associated with the smallest equipment available and which is capable of being carried by an operator, in that such equipment has been extremely slow to operate and would add unduly to the cost of the operation, in addition to the unnecessary time consumption. These particular units are small extruders and only deliver around 11 pounds of molten flowable material per hour. This means that for each encapsulation, about 20 minutes is required to fill the mould. Apart from the unnecessary amount of time involved, the time period makes the process impractical because the plastics material, which is initially forced into the cavity, commences to harden while further material is being forced in. This causes layering of the hardened material and an inferior encapsulation results, which can lead to cracking. In addition, these small extruders are driven electrically and it is extremely difficult to have electrical power cables extending from the power source to the extruders in situations where the encapsulations are to be located underground and are therefore to be formed in holes dug to reach the buried cables. Furthermore, the presence of dampness in the holes makes the use of high current power dangerous.

These problems are discussed in a copending U.S. patent application number 527,759, filed August 30, 1983, and corresponding Canadian application 435,860, filed September 1, 1983, entitled "Methods and Apparatus for Sealing Articles", in the names of Leonard J. Charlebois, Renato Mariani and Fred A. Huszarik.

The above problems, together with a further problem concerning the operational pressure of the existing equipment, are overcome by the invention claimed and described in those applications. As described in the above applications, plastics material is heated to a molten state by being extruded from extruders while being forced through the inlet of a reservoir defined within a manually portable accumulator. The material is maintained at a molten flowable temperature while held within the reservoir and the reservoir is then disposed in communication with a mould cavity, partly defined by the article to be sealed. The molten material is then forced from the reservoir into the mould cavity at a sufficiently fast rate to fill the cavity before flow passages into the cavity become blocked with hardening material. Thus, using the extruder in combination with the accumulators enables the extruders to be located in a fixed position, possibly in a workshop or in a vehicle, and the accumulators may be carried by hand to the site at which a splice is to be provided. It follows that the molten material may be held in its molten condition for lengthy periods before being required to perform an encapsulating operation. When required, it is simply necessary to tranport the accumulator manually to the site and then force the molten material from the accumulator into the mould cavity. Thus, the use of extruders in the actual moulding operation is avoided.

While it is found that the above process using extruders in combination with manually portable accumulators is commercially successful, the use of the process at a multitude of sites in any region involves the use of a large number of extruders, as at least one extruder is required at each central point. These extruders may be transportable in vehicles or disposed within factories. The use of many extruders is necessary as the molten material cannot be held in the accumulators for an indefinite period, e.g. for a number of days, before being used, because of possible breakdown in the structure of the plastics material. It follows, therefore, that while the process using manually portable accumulators is highly successful, it is an undesirably expensive operation when it is considered that extruders are the most expensive part of the equipment necessary for this operation. Currently, such an extruder may cost in the region of $30,000.

The present invention is concerned with a method of encapsulating an article which, when performed extensively and with a concurrency of operations, results in a reduction in the number of extruders required as compared with that following the method described in the above U.S. and Canadian patent applications. The invention is also concerned with a manually portable dispensing container which enables the method of the present invention to be followed.

Accordingly, the present invention provides a method of encapsulating an article comprising:-

placing within a cylindrical reservoir of a manually portable container, sufficient plastic material in non-molten form to seal the article;

heating the material within the reservoir to render it molten and homogeneous;

holding the material homogeneous and in molten state for a sufficiently long period to allow any gases to escape upwardly through the material and outwardly from the reservoir; and, with the gases removed from the molten material and from the reservoir:-

disposing the container with the reservoir in communication with a mould cavity partly defined by the article to be encapsulated; and

moving a wall of the reservoir so as to decrease the reservoir volume and to force the molten material from the chamber and into the mould cavity so as to fill it.

With the method according to the invention, supplies of the non-molten plastics material may be stored at any site or at any centre for filling a plurality of containers in order to be able to provide the molten form of the material ready for moulding purposes. Hence, an extruder is not required at either a site or at such a centre. In fact, for a large field area for providing encapsulated articles such as encapsulated splices upon telecommunications cable, a single extruder may be used provided at a centralised location for extruding plastics material to mould cylindrical billets of the exact size to fit within the reservoirs. These billets would then be dispatched to the various centres or sites for encapsulation purposes and, when required, placed in the reservoirs to be heated. Thus, the method of the invention may be performed by using billets while reducing the required number of extruders.

The use of a pre-moulded billet to be placed in each cylindrical reservoir is preferable because such a billet, which has been moulded previously by an extrusion process, is substantially free of air. Hence, the only air which is required to be dispelled from the molten plastics material is that which occupies the space between the unheated billet and the walls of the reservoir. However, the invention also includes a method in which the cylindrical reservoir is filled with particles of the plastics material. These particles, which may be of pellet form are normally fed from hoppers into extruder barrels. A disadvantage with the use of pellets is that they are separated by air spaces and thus a longer period may be required for dispelling entrapped air after reaching the molten stage than would be the case with the use of a billet.

In the method according to the invention, the wall of the reservoir which is moved is conveniently formed by a piston or a diaphragm which is movable within the container for purpose of changing the reservoir size. Conveniently, the diaphragm or piston is moved under fluid pressure.

The invention further includes a manually portable dispensing container for molten plastic material comprising a body housing a cylinder defining a cylindrical reservoir, the reservoir having an outlet end, heating and heat insulating means around the cylinder, the body having one end which defines an outlet orifice to the reservoir, and support means enabling the container to be disposed with the outlet end of the reservoir in an uppermost position.

Preferably, the body is closed at the other end of the body and the support means extends beyond the other end and away from the body so as to support the container with the other end spaced from a support surface.

One embodiment of the invention will now be described by way of example, with reference to the accompanying drawings in which:-

Figure 1 is a cross-sectional view through a manually portable container;

Figure 2 is a view similar to Figure 1 showing the container holding molten plastic material and in a vertical position; and

Figure 3 is a isometric view, partly in cross-section, showing the container attached to a mould and showing molten plastic material being injected into the mould cavity.

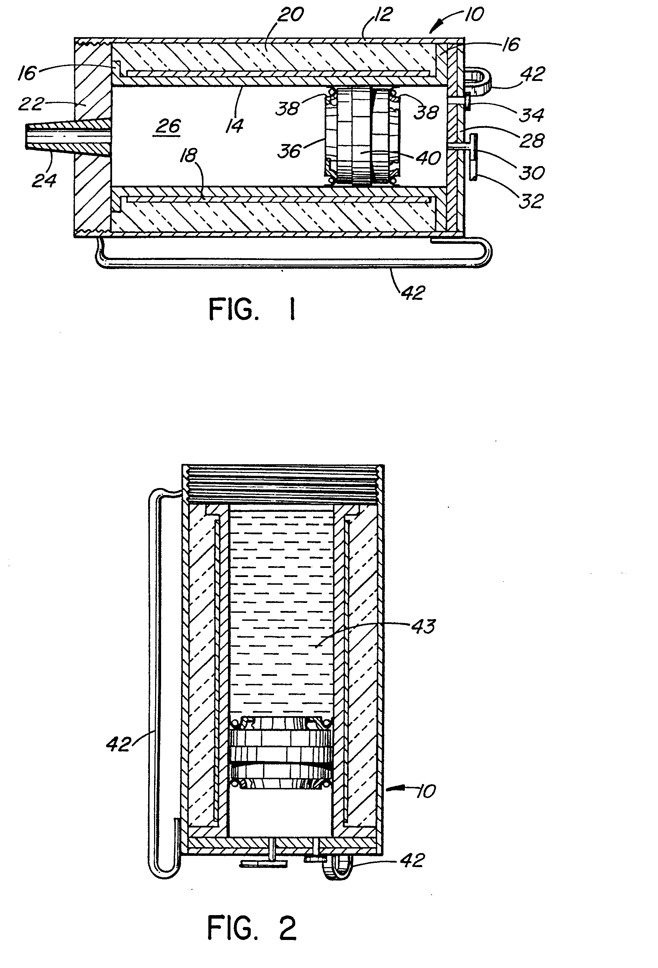

As shown by Figures 1 and 2, a manually portable dispensing container 10 is provided for forming a plastics encapsulation around a splice formed in a telecommunications cable. The container comprises a cylindrical body 12 housing an aluminum cylinder 14 with end flanges 16. Between the body 12 and the cylinder 16 are located a heating means, in the form of an electrical heating element 18 which encircles the cylinder, and a heat insulating means which encircles the heating element and is in the form of glass wool insulation 20 or other insulating material.

One end of the body 12 screw threadably receives an end plate 22 which carries an outlet 24 defining an outlet orifice for the reservoir 26 defined by the cylinder 14. The other end of the body is closed by an end wall 28. The end wall carries a gas pressure inlet 30 to provide pressurized gas or air through a flexible tube 32 to that end of the cylinder. The end plate 28 also carries a pressure relief valve 34.

Within the cylinder 16 is contained a double-acting piston 36. As described in a copending application (Ref. RO-1934) filed concurrently with this application in the name of Leonard J. Charlebois and entitled "Moulding of Plastics Encapsulations", the piston 36 has a ring seal 38 of U-shaped cross-section at each end. Between the two seals is disposed a Teflon (Trademark) bearing 40 which is slidable upon the bore of the cylinder and assists the ring seals 38 in holding the piston 36 concentric with the cylinder 14.

As shown by all the figures, the container is also provided with a support means to enable the container to be disposed with the outlet end of the chamber located above the reservoir. This support means comprises a plurality, namely three in this embodiment, of carrying handles 42 which are secured to the two ends of the body in substantially equally spaced apart positions around it. Each handle extends axially of the container and the end of each handle extends beyond the end plate 28.

In use, the container described above is one of a plurality of such containers which are in use at a multitude of centres used by splicing operators for supply of apparatus and materials for forming encapsulated splices upon telecommunications cables in the field. At each of the centres, billets of plastics material for forming the splices are held in storage to be used for the splicing operations. All of the billets have previously been formed as mouldings by a single extruder which is housed at some centralized location. As extruders operate to extrude plastics material and also to expel the air from the plastic before the extrusion stage, then each of the billets is substantially free of air pockets. Each billet is of cylindrical construction and is of a diameter slightly less than that of the cylinder 14 of each container, so that it may be slid into the reservoir with little space remaining between the cylinder wall and the billet.

To load each container with a billet prior to a heating operation, the plate 22 is unscrewed from the body to completely expose one end of the reservoir and the billet is slid into the reservoir with the piston 36 towards the end plate 28. This is the position of the piston shown in Figures 1 and 2. With the billet in position and with the container either in the horizontal or vertical position shown in Figures 1 or 2, the heater is used to heat the billet and to make it molten as shown at 43 in Figure 2. The heating operation may be performed with the end plate removed as shown in Figure 2, or with it returned to its operating position. The temperature to which the plastics material is raised is dependent not only upon making it molten, but also upon the type of material used. The temperature should not be sufficiently high to cause degradation of the molten material. In this particular case, the plastics material is a low density polyethylene sold under the Dupont trade number 2114 and contains 2,000 parts per million of Irganox 1010, which is a heat stabilizer and anti-oxidant. Other anti-oxidants and/or heat stabilizers may be used, such as "Sanitox R", a trade name of Monsanto Corp. Each billet is approximately 10 inches long and 5 3/4 inches in diameter, and the heat-up time to render it molten is approximately 3 1/2 hours using a thermostatically controlled heater operating at around 390°F to give a controlled molten temperature.

After the plastic billet has become molten, then it is necessary to ensure that all of the entrapped air has escaped from the molten material. To do this, the container is located in a vertical position, as shown in Figure 2, so that any gases are allowed to move upwardly through the molten mass and out from the top surface of the plastic. As it is expected that little or no air is entrapped within the billet, then the only air which may require to escape is that which lay between the billet and the cylinder wall before the heating operation took place. During the heating process, the plastic billet expands and accommodates the extra space, thereby assisting in expelling air.

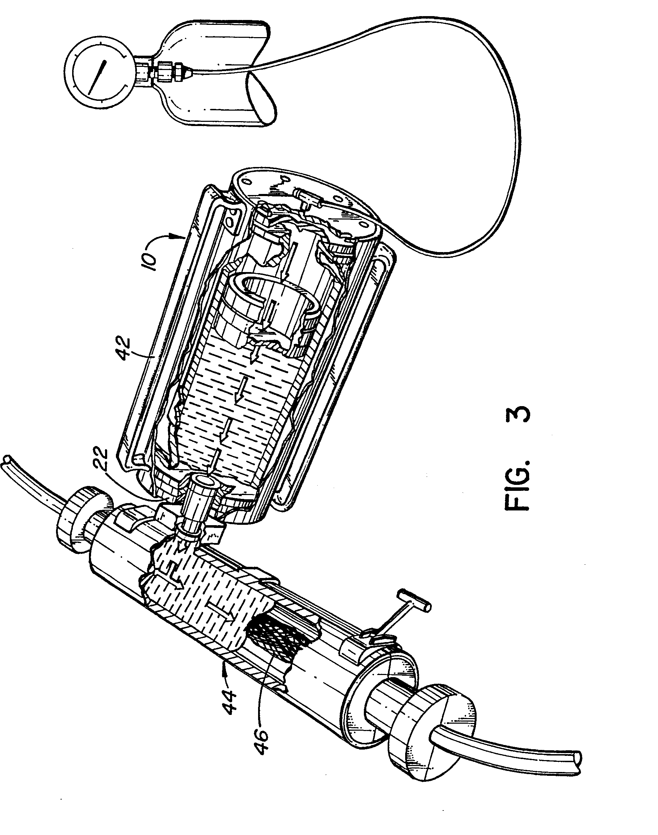

When sufficient time has elapsed to allow for the escape of the gases and with the end plate 22 in position, the piston 36 is moved towards the end plate 22, by fluid under pressure through the flexible pipe 32, so as to completely fill the reservoir with the plastics material by expulsion of the air or gases at the upper end. When the plastics material begins to flow through the outlet 24, thereby guaranteeing that no air exists within the reservoir, the container is secured to the inlet of a mould 44 (see Figure 3). This mould is a low pressure mould, i.e. it operates below 100 pounds per square inch pressure, and may be of the construction described in U.S. patent numbers 4,152,539 and 4,322,573. Within the mould, a spliced region 46 of a cable 48 is located, the cable extending from both ends of the mould. The mould is disposed in a normal setting for an in situ moulding operation, that is, at the bottom of a pit in the ground for encapsulating and sealing splices formed in an underground cable.

The moulding operation is then performed by moving the piston towards the end plate 22 so as to dispel sufficient of the molten material through the outlet 24 and into the mould cavity so as to completely fill the cavity and encapsulate the splices formed between conductors at the splice region 46. The formation of encapsulations within a mould in this manner has been described previously in patents in the name of Leonard J. Charlebois and include the two U.S. patents referred to above.

As can be seen from the above description, the operation for filling moulds in the field for encapsulating telecommunications splices is a commercially satisfactory operation when using a manually portable container which has been charged with the plastic material in the manner described and according to the invention. Because the plastics material is provided in a suitable fashion and in non-molten form for disposition within the reservoir of each container, then an extruder for performing the operation of directly filling the container with molten material such as in prior U.S. application 527,759 and Canadian application 435,860, is not required. As discussed above, where billets of material are provided, only one extruder at a centralized location is necessary for supplying the pre-moulded billets to a large surrounding area in which encapsulations of telecommunications cable splices are to be made. Hence, the cost of the total operation is reduced significantly below that described in the previous U.S. and Canadian patent applications.

In a modification of the embodiment described above, the billets are not used. Instead, pellets of the plastics material (not shown) are placed into each reservoir to be heated to make them molten and in readiness for the encapsulation moulding operations. While the use of the pellets avoids any need of an extruder, there is more entrapped air occurring because of the air spaces provided between the pellets. Thus it may take a longer time period to expel the entrapped gases.

The above process according to the invention and the use of the container as described and according to the invention provides an extremely economical method of moulding encapsulations around articles, and is particularly economical for forming encapsulations around splices of telecommunications cables in the

0180334

12

field.  The process avoids not only the use of prior established extrusion equipment which is particularly unwieldy for some in situ moulding operations, for instance underground, but also removes the necessity of widespread use of extruders such as in the U.S. and Canadian patent applications discussed above.

CLAIMS:

1. A method of encapsulating an article comprising

placing within a cylindrical reservoir (26) of a manually portable container (12), sufficient plastic material in non-molten form to seal the article characterized in that the method further comprises:-

heating the material within the reservoir to render it molten and homogeneous;

holding the material homogeneous and in a molten state for a sufficiently long period to allow any gases to escape upwardly through the material and outwardly from the reservoir; and, with the gases removed from the molten material and from the reservoir:-

disposing the container with the reservoir in communication with a mould cavity partly defined by the article to be encapsulated; and

moving a wall of the reservoir so as to decrease the reservoir volume and to force the molten material from the reservoir and into the mould cavity so as to fill it.

2. A method according to claim 1, characterized in that the plastic material, which is placed within the reservoir, is in the form of a cylindrical billet.

3. A method according to claim 1, characterized in that the plastic material is placed into the reservoir in the form of particulate material.

14

4. A method according to claim 1, characterized in that the wall of the reservoir comprises an end of a piston (36), which is movable so as to alter the volume of the reservoir.

5. A method according to claim 1, characterized in that the wall of the reservoir is formed by a diaphragm which is movable under gas pressure so as to change the volume of the reservoir.

6. A manually portable container (12) for molten plastic material characterized in that it comprises a body (12) housing a cylinder (14) defining a cylindrical reservoir (26) with an outlet end, and heating and heat insulating means (18,20) around the reservoir, the body having one end (22,24) which defines an outlet orifice to the reservoir, and support means (42) enabling the container to be disposed with the outlet end of the reservoir in an uppermost position.

7. A container according to claim 6, characterized in that the body has another closed end (28), and the support means extends beyond said other end to support the container with said other end spaced from a support surface and with the outlet orifice disposed above said other end.

8. A container according to claim 6, characterized in that at said one end of the body, there is provided a removable body part (22) which, upon removal, completely exposes one end of the reservoir.

9. A container according to claim 7, characterized in that the support means comprises a plurality of carrying handles (42) which extend axially along the body and project beyond the other end of the body to support the container.

FIG. 1

FIG. 2

FIG. 3